# EUROPEAN PATENT SPECIFICATION

(11) **EP 4 187 857 B1**
(45) Date of publication and mention of the grant of the patent: **21.10.2026**
(21) Application number: 21846906.2
(22) Date of filing: 17.06.2021
(51) Int. Cl.: G05B 19/042, H04L 12/12, H04L 12/403, G06F 13/362, G06F 13/42

(54) **COMMUNICATION DEVICE, COMMUNICATION SYSTEM, COMMUNICATION CONTROL METHOD, AND PROGRAM**
KOMMUNIKATIONSVORRICHTUNG, KOMMUNIKATIONSSYSTEM, KOMMUNIKATIONSSTEUERUNGSVERFAHREN UND PROGRAMM
DISPOSITIF ET SYSTÈME DE COMMUNICATION, PROCÉDÉ DE COMMANDE DE COMMUNICATION, ET PROGRAMME

(30) Priority: 22.07.2020 JP 2020125771
(43) Date of publication of application: 31.05.2023
(73) Proprietor: Panasonic Intellectual Property Management Co., Ltd., Osaka-shi, Osaka 540-6207 (JP)
(72) Inventor: MISHIMA, Masashi, Osaka-shi, Osaka 540-6207 (JP); SONODA, Daisuke, Osaka-shi, Osaka 540-6207 (JP); IKEUCHI, Yoshiaki, Osaka-shi, Osaka 540-6207 (JP)
(74) Representative: SSM Sandmair
(86) International application number: PCT/JP2021/023014
(87) International publication number: WO 2022/019014

(56) References cited:
- EP-A1- 3 528 448
- EP-A1- 3 528 471
- EP-A1- 4 084 417
- JP-A- 2014 053 741
- JP-A- 2019 139 630
- US-A1- 2017 060 794
- US-B1- 6 317 415

## Description

### TECHNICAL FIELD

The present disclosure generally relates to a communication device, a communication system, a communication control method, and a program. More specifically, the present disclosure relates to the communication device, the communication system, the communication control method, and the program that communicate with one or more slaves.

### BACKGROUND ART

PTL 1 discloses a communication device that is connected to a network and in which data is updated in every predetermined period. The communication device includes first scheduling part and a second scheduling part. The first scheduling part secures a first communication band necessary for updating first data used for controlling a manufacturing apparatus or a production facility in every predetermined period. The second scheduling part secures a second communication band necessary for causing second data to arrive at a transmission destination within a designated time. The second communication band is other than the first communication band among communication bands of the network.

In the communication device described in PTL 1, the second data (sub-data) can be transmitted in a free band other than a communication band necessary for communicating the first data (main data). However, this communication device has a problem that it is difficult to periodically transmit, receive, or transfer the second data (sub-data) at a period shorter than the time required for transmitting the first data (main data).

### Citation List

### Patent Literature

PTL 1: Unexamined Japanese Patent Publication No. 2018-64245
EP 4 084 417 A1 being published after the present priority date discloses A communication device including a processing part and a communication part that communicates with one or more slaves. The processing part has a function of executing communication processing and setting processing. The communication processing is processing for transmitting a main frame including main data from the communication part to one or more slaves in a first period. The setting processing is processing for setting a second period shorter than the first period and a time slot allocated to at least one slave among the one or more slaves in every second period.
EP 3 528 448 A1 discloses a communication apparatus connected to a network over which data is updated every predetermined cycle. The communication apparatus includes first scheduling means for securing a first communication band necessary for updating every predetermined cycle, first data to be used for control of a manufacturing apparatus or a production facility, second scheduling means for securing a second communication band necessary for delivering second data to a destination within a designated time period in a communication band other than the first communication band of communication bands of the network, and third scheduling means for securing a third communication band for transmitting third data in a communication band set as neither of the first communication band and the second communication band of the communication bands of the network.
US 2017/060794 A1 discloses a method of transferring control data between a master device and a slave device over a path including at least one intermediate device, such that the path includes multiple path segments between successive pairs of devices. Data is transferred on each path segment in a plurality of frames of data, wherein the frames are synchronized between said path segments. The control data is transmitted in command slots of each frame, wherein a command slot comprises a set of control data bit slots, and wherein a control data bit slot is a time window associated with the transfer of a single control data bit over a single path segment between the devices on the path segment. The control data bit slots for each command slot are subdivided into: a first set of bit slots reserved for the transfer of control data in the direction from the master device to the slave device, and a second set of bit slots reserved for the transfer of control data either in the direction from the master device to the slave device or in the direction from the slave device to the master device. The time positions of the command slots on each path segment are offset from the positions of the command slots on each respective adjacent path segment by at least one control data bit slot.
EP 3 528 471 A1 discloses a control device including a cyclic communication part and a communication management part. A cyclic communication part controls communication of first control data of which arrival in a first guarantee time is guaranteed according to a preset cyclic period and second control data of which arrival in a second guarantee time longer than the cyclic period is guaranteed and of which a sequence of information included is determined. The communication management part manages a communication schedule of first control data and second control data. When new second control data is acquired while the second control data is divided into a plurality of communication data and communicated according to the cyclic period, the communication management part determines a communication sequence of the plurality of second control data according to priorities of the plurality of second control data.

### SUMMARY OF THE INVENTION

The present invention is defined in the appended independent claims to which reference should be made. Advantageous features are set out in the appended dependent claims. The present disclosure has been made in view of the above points, and an object of the present disclosure is to provide a communication device, a communication system, a communication control method, and a program that make it easy to periodically transmit, receive, or transfer sub-data at a cycle shorter than the time required for transmitting main data.

A communication device according to one aspect of the present disclosure includes a processor and a communication part. The communication part communicates with one or more slaves. The processor has a function of executing communication processing and setting processing. The communication processing includes causing the communication part to transmit a frame including main data to the one or more slaves in a first period. The setting processing includes setting N (N is an integer of 2 or more) second periods within the first period. The setting processing includes setting a slot for performing communication of sub-data other than the main data for each of the N second periods. The frame includes at least one of the slots during a transmission period of the main data.

A communication system according to another aspect of the present disclosure includes the communication device and the one or more slaves. The one or more slaves are connected to the communication device and communicate with the communication device.

A communication control method according to another aspect of the present disclosure includes a communicating step and a setting step. The communicating step includes causing a frame including main data to be transmitted to one or more slaves connected to the communication device in a first period. The setting step includes setting N (N is an integer of 2 or more) second periods within the first period. The setting step includes setting a slot for performing communication of sub-data other than the main data for each of the second periods. The frame includes at least one of the slots during a transmission period of the main data.

A program according to another aspect of the present disclosure causes one or more processors to execute the communication control method described above.

The present disclosure has an advantage that it is easy to periodically transmit, receive, or transfer the sub-data at a cycle shorter than the time required for transmitting the main data.

### BRIEF DESCRIPTION OF THE DRAWINGS

Fig. 1 is a block diagram illustrating an outline of a communication system having a communication device according to an exemplary embodiment of the present disclosure.
Fig. 2 is an explanatory diagram of communication processing by the communication device.
Fig. 3 is an explanatory diagram of operation timing of a slave included in the communication system.
Fig. 4 is a flowchart of setting processing by the communication device.
Fig. 5 is an explanatory diagram of division processing by the communication device.
Fig. 6 is an explanatory diagram of communication processing by a communication device according to a comparative example.

### DESCRIPTION OF EMBODIMENT

### (1) Outline

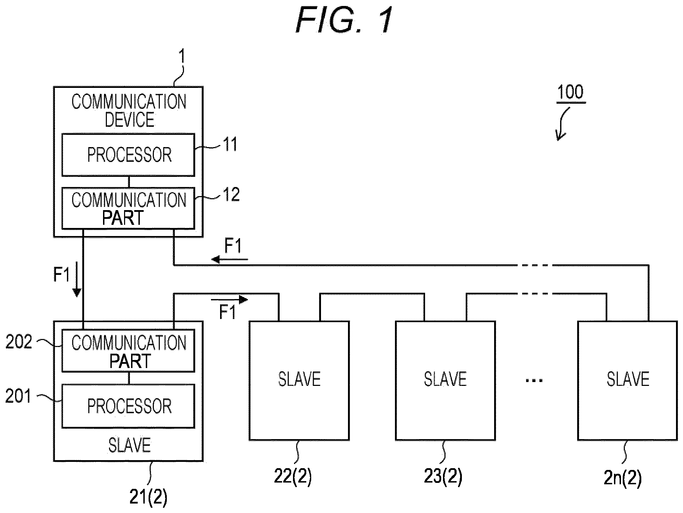

Fig. 1 is a block diagram illustrating an outline of communication system 100 having communication device 1 according to an exemplary embodiment of the present disclosure. As illustrated in Fig. 1, communication system 100 includes communication device 1 and one or more (here, n (n is a natural number)) slaves 2 (21, 22, 23,... 2n) connected to communication device 1. Communication device 1 is a master corresponding to a host device of one or more slaves 2. Communication device 1 and one or more slaves 2 are connected to one network. One or more slaves 2 are connected to communication device 1 and communicate with communication device 1.

In the present exemplary embodiment, communication device 1 and one or more slaves 2 are connected to industrial network. The "industrial network" in the present disclosure is a field network used in factory automation, for example, and is used for communication between a plurality of devices installed in a factory. The industrial network may include, for example, Ethernet/internet protocol (Ethernet/IP) (registered trademark), Ether for Control Automation Technology (EtherCAT: registered trademark), or PROFINET (registered trademark). The device connected to the industrial network may include, for example, a controller (a programmable logic controller (PLC) or the like), a sensor (a displacement sensor, a flowmeter, a pressure gauge, an image sensor, or the like), or a remote input and output (I/O). The device connected to the industrial network may include, for example, a servo amplifier, an inverter, a robot, an actuator, or a valve.

The industrial network is required to have robustness, punctuality, and real time property as compared with standard best-effort networks used in offices and the like. For example, in an industrial network, in a case where control data is periodically transmitted from a controller to a device to be controlled such as a servo amplifier, a delay is not allowed as compared with a best effort type network, and an increase in response speed to the control data is required.

As illustrated in Fig. 1, communication device 1 includes processor 11 and communication part 12. Communication part 12 is a communication interface for communication with one or more slaves 2. Processor 11 has a function of executing communication processing and setting processing.

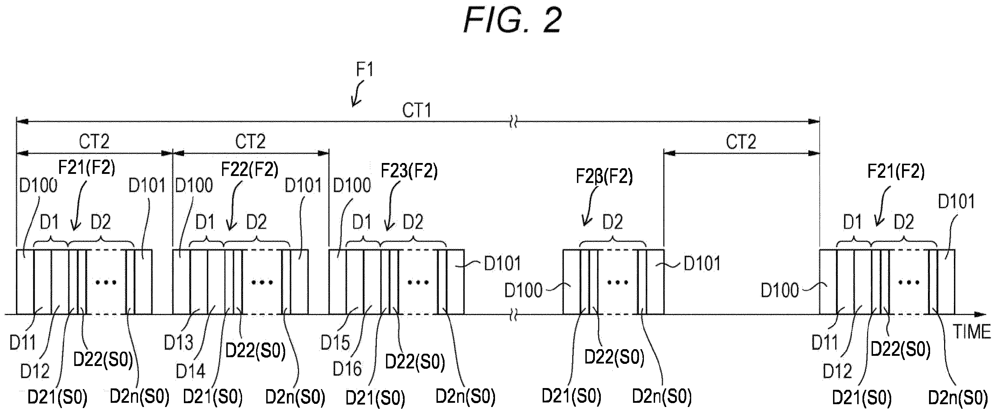

Fig. 2 is an explanatory diagram of communication processing by the communication device according to the exemplary embodiment of the present disclosure. The communication processing is a process of causing communication part 12 to transmit frame (communication frame) F1 including the main data to one or more slaves 2 in first period CT1. That is, communication device 1 executes the communication processing to transmit the main data to one or more slaves 2 in first period CT1. For example, when communication device 1 is a controller and one or more slaves 2 are devices such as servo amplifiers to be controlled, the main data may include control data for controlling slaves 2. First period CT1 is, for example, several tenth ms to several ms. When receiving the main data, each slave 2 executes processing in accordance with the received main data. For example, when the main data includes one or more pieces of control data corresponding to one or more slaves 2, each slave 2 acquires corresponding control data included in the main data upon receiving the main data, and executes processing in accordance with the acquired control data.

The setting processing includes setting second period CT2 within first period CT1. In the setting processing, processor 11 sets second period CT2 N times (N is an integer of 2 or more) within first period CT1. The setting processing includes setting slot SO for performing communication of sub-data other than the main data for each second period CT2. That is, in first period CT1, each of the N second periods CT2 includes slot SO for performing communication of the sub-data other than the main data.

In the present exemplary embodiment, in the setting processing, processor 11 allocates slot SO to at least one slave 2 among one or more slaves 2 for each second period CT2.

Slave 2 can acquire data included in corresponding slot SO (allocated slot S0) and transmit data to another device (communication device 1 or another slave 2) using corresponding slot S0. That is, slave 2 to which slot SO is allocated can periodically receive the sub-data using slot SO in every second period CT2 separately from the main data transmitted in first period CT1. Slave 2 to which slot SO is allocated can periodically transmit the sub-data separately from the main data using slot SO every second period CT2. That is, in the present exemplary embodiment, for example, there is an advantage that slave 2 connected to communication device 1 can easily transmit or receive the sub-data periodically (in second period CT2).

Further, in the communication processing, processor 11 causes frame F1 to be transmitted such that at least one slot SO is included in the middle of the transmission period of the main data. In other words, at least one slot SO of second period CT2 is inserted in the middle of frame F1. Therefore, in the present exemplary embodiment, for example, slave 2 to which slot SO is allocated can periodically transmit, receive, or transfer the sub-data in a cycle (second period CT2) shorter than the transmission time of the main data (time required for transmitting the main data). That is, in the present exemplary embodiment, there is an advantage that it is easy to periodically transmit, receive, or transfer the sub-data in a cycle (second period CT2) shorter than the time required for transmitting the main data.

### (2) Details

Hereinafter, communication system 100 including communication device 1 of the present exemplary embodiment will be described in detail with reference to Fig. 1. In the present exemplary embodiment, a plurality of (here, n (n is an integer of 1 or more)) slaves 2 are connected to communication device 1. The plurality of slaves 2 (in other words, one or more slaves 2) are daisy-chained to communication device 1. Specifically, first slave 21, second slave 22, third slave 23,..., and nth slave 2n are connected to communication device 1 in this order in a ring shape. Thus, in the present exemplary embodiment, frame F1 transmitted from communication device 1 is transferred to first slave 21, second slave 22, third slave 23,..., nth slave 2n, and communication device 1 in this order.

In communication system 100 according to the present exemplary embodiment, one of the plurality of slaves 2 is a sensor, and remaining slaves 2 are servo amplifiers. In other words, in the present exemplary embodiment, at least one of the one or more slaves 2 is a motor drive device that drives a motor. In communication system 100, communication device 1 is a controller that individually or entirely controls the plurality of slaves 2 (that is, the plurality of servo amplifiers and the sensor).

Communication device 1 includes processor 11 and communication part 12. In the present exemplary embodiment, communication device 1 stores data in a memory included in processor 11, but may include a storage separately from processor 11. Examples of the storage are an electrically rewritable nonvolatile memory such as an electrically erasable programmable read-only memory (EEPROM), and a volatile memory such as a random access memory (RAM).

Processor 11 includes, for example, a computer system. The computer system mainly includes a processor and a memory as hardware. By the processor executing a program recorded in the memory of the computer system, the function of processor 11 is achieved. The program may be recorded in advance in the memory of the computer system, may be provided through a telecommunication line, or may be provided by being recorded in a non-transitory storage readable by the computer system, such as a memory card, an optical disk, or a hard disk drive.

Communication part 12 is a communication interface for communicating with the plurality of slaves 2, and includes, for example, a wired communication module conforming to an industrial Ethernet (registered trademark) protocol. Communication part 12 transmits frames F1 to communication part 202 (described later) of slave 2 (in Fig. 1, first slave 21) at the foremost stage directly connected to communication device 1. Communication part 12 receives frames F1 transmitted from communication part 202 of slave 2 (in Fig. 1, nth slave 2n) at the rearmost stage directly connected to communication device 1.

Processor 11 has a function of executing communication processing, setting processing, and division processing. Both the setting processing and the division processing are processes executed before communication system 100 including communication device 1 is operated. The communication processing is a process executed while communication system 100 including communication device 1 is in operation.

The division processing is a process of dividing the main data into a plurality of main data pieces. In the present exemplary embodiment, the main data may include control data for each slave 2 transmitted from communication device 1 to each slave 2. Each main data piece after division may include some or all of the control data transmitted to at least one slave 2. In the division processing, processor 11 divides the main data into a plurality of main data pieces based on allowable maximum data size ADm_{div} (described later). Details of the division processing will be described later in "(3) Setting Processing".

The communication processing is a process of causing communication part 12 to transmit frame F1 to the plurality of slaves 2 in first period CT1. First period CT1 is preset in communication device 1. In the present exemplary embodiment, communication device 1 transmits frame F1 to first slave 21, so that frame F1 is transmitted to first slave 21, second slave 22, third slave 23,..., and nth slave 2n in this order (see Fig. 1).

As illustrated in Fig. 2, frame F1 includes a plurality of divided frames F21, F22,..., and F2β (β is an integer of 2 or more). That is, in the communication processing, processor 11 (repeatedly) transmits frame F1 including the plurality of divided frames F21, F22,..., and F2β in first period CT1. Hereinafter, when the plurality of divided frames F21, F22,..., and F2β are not distinguished, they are referred to as "divided frame F2".

Here, "β" is the number of divisions. The number of divisions β is the number of divided frames F2 constituting frame F1, and is calculated in the setting processing as described later. The number of divisions β is equal to the number of times N of second period CT2 included in first period CT1.

More specifically, in the communication processing, a plurality of divided frames F21, F22,..., and F2β are transmitted from communication part 12 to the plurality of slaves 2 in second period CT2 within one first period CT1 (see Fig. 2). In other words, in the communication processing, processor 11 transmits the plurality of divided frames F21, F22,..., and F2β in second period CT2. Second period CT2 is set in the setting processing as described later.

As illustrated in Fig. 2, each divided frame F2 includes at least header D100, sub-data region D2, and footer D101. At least one of the plurality of divided frames F21, F22,..., and F2β (in the example of Fig. 2, divided frames F21, F22, and F23) further includes main data region D1.

Main data region D1 is a region (slot) used for transmission of main data (main data piece). That is, the main data is transmitted in main data region D1. In each of at least one divided frame F2 (divided frames F21, F22, and F23) including main data region D1, main data region D1 includes at least a part of at least one slot of the plurality of slots D11, D12,..., and D1n (here, n is the number of slaves 2). The plurality of slots D11, D12,..., and D1n are allocated to the plurality of slaves 21, 22,..., and 2n, respectively. Main data region D1 of frame F1 preferably includes all of n slots D11, D12,..., D1n corresponding to n slaves 2.

In the example of Fig. 2, main data region D1 of divided frame F21 includes slots D11 and D12. Main data region D1 of divided frame F22 includes slots D13 and D14. Main data region D1 of divided frame F23 includes slots D15 and D16. That is, in each of divided frames F21, F21, and F23 including main data region D1, main data region D1 includes the entire two slots. However, the present invention is not limited to this example, and one slot (for example, slot D11 allocated to first slave 21) may be divided and included in main data region D1 of the plurality of divided frames F2. For example, main data region D1 of divided frame F21 may include a part of slot D11, and main data region D1 of divided frame F22 may include the remaining part of slot D11.

As described above, in the present exemplary embodiment, processor 11 divides the plurality of main data pieces in N second periods CT2 and transmits the divided main data pieces in the communication processing.

Slave 2 that has received frame F1 can acquire the main data from communication device 1 using the allocated slot (for example, in the case of first slave 21, slot D11) in main data region D1. Specifically, each slave 2 acquires the main data (control data of slave 2) for slave 2 from divided frame F2 including the slot allocated to slave 2. In the example of Fig. 2, first slave 21 can acquire the main data (the control data of first slave 21) from communication device 1 using slot D11 of divided frame F21. Third slave 23 can acquire the main data (control data of third slave 23) from communication device 1 using slot D13 of divided frame F22.

In the present exemplary embodiment, as described above, the main data may include the control data for each slave 2 transmitted from communication device 1 to each slave 2. The main data may include response data to the control data for each slave 2.

In the present exemplary embodiment, processor 11 includes data (hereinafter, also referred to as "synchronous data") indicating the end timing of transmission of the main data in frame F1 and transmits frame F1. That is, frame F1 may include synchronous data indicating the end timing of transmission of the main data. The synchronous data is included, for example, in header D100 of last divided frame F2 (in the example of Fig. 2, divided frame F23) including main data region D1 among the plurality of divided frames F2.

In each divided frame F2, sub-data region D2 is divided into a plurality (here, n) of slots D21, D22,..., and D2n. The plurality of slots D21, D22,..., and D2n correspond to slot SO set in the setting processing, and are allocated to the plurality of slaves 21, 22,..., and 2n, respectively. That is, in the present exemplary embodiment, frame F1 includes slot S0. Each divided frame F2 includes slot S0. Slot SO is set in the setting processing.

Slave 2 that has received divided frame F2 can acquire the sub-data included in allocated slot SO (for example, in the case of first slave 21, slot D21) in sub-data region D2, and can transmit the sub-data to another device (communication device 1 or another slave 2) using slot S0. In the present exemplary embodiment, the sub-data may include various data transmitted from slave 2 to another slave 2. That is, slot SO is used to perform communication of sub-data other than the main data. In particular, slot SO can be used for communication between one or more slaves 2.

Here, in the present exemplary embodiment, processor 11 updates the main data in every first period CT1. Specifically, processor 11 generates the main data to be included in next frame F1 between the start of transmission of frame F1 and the start of transmission of next frame F1. When generating the main data, processor 11 refers to, for example, command information from a host system of communication device 1, response information received from each slave 2, and the like. For example, processor 11 generates control data (main data) for controlling each servo amplifier (each slave 2) by referring to detection information received from the sensor (slave 2). Therefore, first period CT1 needs to be set to such an extent that the processing for generating the main data can be executed, and depends on the processing performance of processor 11.

The setting processing is a process of setting second period CT2 and slot SO used in the communication processing. That is, the communication processing is executed on the basis of the parameter set in the setting processing.

In the setting processing, processor 11 sets second period CT2 N times (N is an integer of 2 or more) within first period CT1. Second period CT2 is shorter than first period CT1. In the present exemplary embodiment, as will be described later, processor 11 sets second period CT2 on the basis of at least first period CT1, the data size of the main data, and the data size of the sub-data. Slot SO is allocated to slaves 2 in every second period CT2. In the present exemplary embodiment, processor 11 allocates slot SO to all slaves 2 in each second period CT2 (each divided frame F2). Slot SO allocated to each slave 2 in the setting processing constitutes sub-data region D2 described above. Details of the setting processing will be described later in "(3) Setting Processing". The slot length of slot SO allocated to each slave 2 may be different in accordance with a data size.

Slave 2 includes processor 201 and communication part 202. Slave 2 stores data in a memory included in processor 201, but may include a storage separately from processor 201. The storage is an electrically rewritable nonvolatile memory such as an EEPROM, a volatile memory such as a RAM, or the like.

Processor 201 includes, for example, a computer system. The computer system mainly includes a processor and a memory as hardware. By the processor executing a program recorded in the memory of the computer system, the function of processor 201 is achieved. The program may be recorded in advance in the memory of the computer system, may be provided through a telecommunication line, or may be provided by being recorded in a non-transitory storage readable by the computer system, such as a memory card, an optical disk, or a hard disk drive.

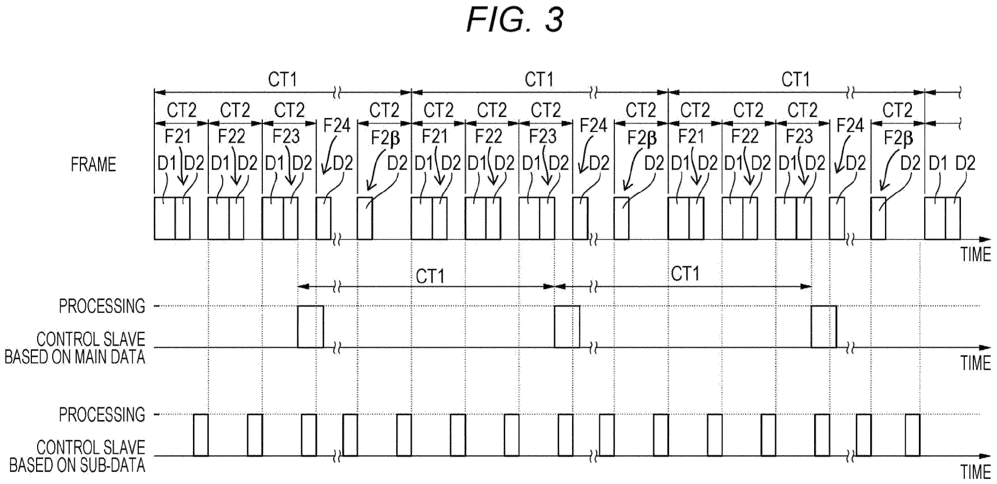

Processor 201 has a function of executing processing based on corresponding data (here, the control data) among the main data received by communication part 202. Fig. 3 is an explanatory diagram of the operation timing of the slave included in communication system 100 according to the explanatory exemplary embodiment of the present disclosure. As illustrated in Fig. 3, when receiving divided frame F2 (divided frame F23 in the example of Fig. 2) including the synchronous data, processor 201 executes processing according to the main data (control data) after the end of the reception of divided frame F2. Since divided frame F2 (divided frame F23) including the synchronous data is transmitted in first period CT1, processor 201 of each slave 2 executes processing according to the main data in first period CT1. In other words, frame F1 includes data (synchronous data) for controlling slave 2 in first period CT1. One or more (a plurality of) slaves 2 execute processing according to the main data in synchronization with each other based on the synchronous data. In other words, frame F1 includes data (synchronous data) for synchronizing the operations of one or more slaves 2.

Processor 201 has a function of executing processing according to corresponding data among the sub-data received by communication part 202. For example, with the reception time point of header D100 of each divided frame F2 as a reference, when a predetermined delay time has elapsed from this reception time point, processor 201 executes processing according to the sub-data received in this divided frame F2 (see Fig. 3). For example, the delay time is set to be shorter than second period CT2 by the time required for the processing according to the sub-data, but is not limited thereto. Since divided frame F2 is transmitted in second period CT2 as described above, processor 201 executes processing according to the sub-data in second period CT2.

Further, processor 201 has a function of executing a process of transmitting the sub-data to another device using allocated slot SO in sub-data region D2 of received divided frame F2.

Communication part 202 is a communication interface for communicating with communication device 1 or another slave 2, and includes, for example, a wired communication module conforming to an industrial Ethernet (registered trademark) protocol. Communication part 202 receives frame F1 (divided frame F2) transmitted from communication part 12 of communication device 1 or communication part 202 of slave 2 in the previous stage directly connected to slave 2. Communication part 202 transmits received frames F1 (divided frame F2) to communication part 12 of communication device 1 at the subsequent stage directly connected to slave 2 or communication part 202 of slave 2. As an example, communication part 202 of first slave 21 receives frame F1 transmitted from communication part 12 of communication device 1, and transmits received frame F1 to communication part 202 of second slave 22. At this time, communication part 202 of first slave 21 may appropriately update received frame F1 and then transmit the frame.

### (3) Setting Processing

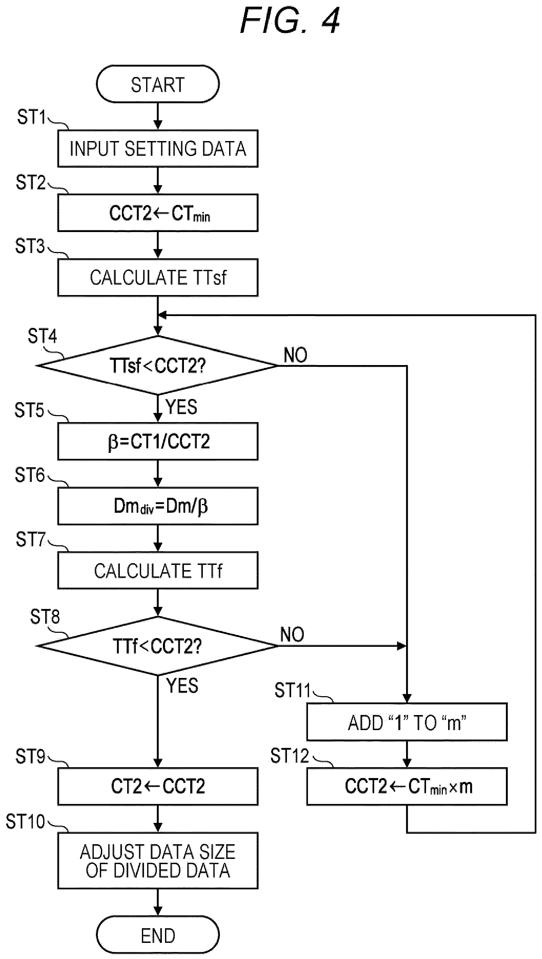

Hereinafter, setting processing executed by processor 11 of communication device 1 will be described in detail with reference to Fig. 4. Fig. 4 is a flowchart illustrating the setting processing executed by communication device 1 according to the exemplary embodiment of the present disclosure.

As described above, the setting processing is a process of setting second period CT2 and slot S0. The setting processing is executed by processor 11 when the user performs a predetermined operation using a user interface included in communication device 1, for example, before communication system 100 is operated. Before the setting processing is executed, the user inputs setting data necessary for executing the setting processing to communication device 1 using the user interface.

In the present exemplary embodiment, the setting data includes a total data size of the main data, a total data size of the sub-data, and minimum communication period CTₘᵢₙ. The total data size of the main data is a sum of the data sizes of the main data receivable by respective slaves 2 for all the frames. The total data size of the sub-data is a sum of all frames of the data size of the sub-data that can be transmitted, received, or transferred by each slave 2. Minimum communication period CTₘᵢₙ is the minimum communication period allowed for communication between communication device 1 and one or more slaves 2. In the present exemplary embodiment, minimum communication period CTₘᵢₙ is the longest communication period among the communication periods that can be handled by the plurality of slaves 21, 22,..., and 2n.

The setting data may be acquired by communication device 1 from each slave 2 when the communication between communication device 1 and each slave 2 is established and an initialization frame is transmitted from communication device 1 to each slave 2. That is, communication device 1 acquires the setting data from each slave 2 as a response to the initialization frame. In this case, it is assumed that the setting data is set in each slave 2 in advance, for example, by the user inputting the setting data.

In the setting processing, when the setting data is input (ST1), processor 11 first sets minimum communication period CTₘᵢₙ as second period candidate CCT2 (ST2). Processor 11 calculates minimum transmission time TTsf of divided frame F2 (ST3). Minimum transmission time TTsf is a transmission time (time required for transmission) of divided frame F2 including only header D100, sub-data region D2, and footer D101. Specifically, processor 11 calculates minimum transmission time TTsf by performing calculation on the basis of the following Expression (1).
[Math. 1] $TTsf = \left(Dh+Ds+Df\right) ⋅ \frac{1}{Tr} + x ⋅ Td 1 + Td 2$ (1)

In the above Expression (1), "Dh" represents the data size of header D100 of divided frame F2, "Ds" represents the total data size of the sub-data, and "Df" represents the data size of footer D101 of divided frame F2. "Tr" represents a transfer rate, "x" represents the number of devices (communication device 1 and slave 2) belonging to communication system 100 (= n + 1), "Td1" represents a delay time per device, and "Td2" represents a delay time in entire communication system 100.

Processor 11 compares minimum transmission time TTsf with second period candidate CCT2 (minimum communication period CTₘᵢₙ) (step ST4). When minimum transmission time TTsf is shorter than second period candidate CCT2 (Yes in step ST4), processor 11 calculates the number of divisions β (step ST5). Specifically, processor 11 calculates the number of divisions β by performing calculation on the basis of the following Expression (2).
[Math. 2] $β = \frac{CT 1}{CCT 2}$ (2)

That is, the number of divisions β is a quotient calculated by dividing first period CT1 by second period candidate CCT2.

Next, processor 11 calculates data size Dm_{div} of the divided data obtained by dividing the main data by performing calculation on the basis of the following Expression (3) (step ST6).
[Math. 3] ${Dm}_{div} = \frac{Dm}{β}$ (3)

In the above Expression (3), "Dm" represents the total data size of the main data.

Next, processor 11 calculates required transmission time TTf of divided frame F2 (step ST7). required transmission time TTf is a transmission time (time required for transmission) of divided frame F2 including header D100, the transmission region of the divided data calculated in step ST6, sub-data region D2, and footer D101. Specifically, processor 11 calculates required transmission time TTf by performing calculation on the basis of the following Expression (4).
[Math. 4] $TTf = \left(Dh+{Dm}_{div}+Ds+Df\right) ⋅ \frac{1}{Tr} + x ⋅ Td 1 + Td 2$ (4)

Next, processor 11 compares required transmission time TTf with second period candidate CCT2 (minimum communication period CTₘᵢₙ) (step ST8). When required transmission time TTf is shorter than second period candidate CCT2 (Yes in step ST8), processor 11 sets second period candidate CCT2 (minimum communication period CTₘᵢₙ) to second period CT2 (step ST9).

As described above, in the present exemplary embodiment, in the setting processing, processor 11 sets second period CT2 based on at least first period CT1, data size Dm of the main data, and data size Ds of the sub-data.

When second period CT2 is set, processor 11 adjusts data size Dm_{div} of the divided data based on second period CT2 and required transmission time TTf (step ST10). Here, processor 11 calculates allowable maximum data size ADm_{div} of the divided data. Allowable maximum data size ADm_{div} is a maximum data size of divided data that can be allocated to main data region D1 of one divided frame F2. Specifically, processor 11 calculates allowable maximum data size ADm_{div} by performing calculation on the basis of the following Expression (5).
[Math. 5] ${ADm}_{div} = {Dm}_{div} + \left(CT2-TTf-α\right) ⋅ Tr$ (5)

In the above Expression (5), "α" represents a margin time in which jitter is taken into consideration.

After allowable maximum data size ADm_{div} is calculated, processor 11 sets main data region D1 and sub-data region D2 of each divided frame F2.

Specifically, processor 11 sets slots D11, D12,..., and D1n in main data region D1 of at least one divided frame F2 such that the entire main data is transmitted in any of the plurality of divided frames F21, F22,..., and F2β.

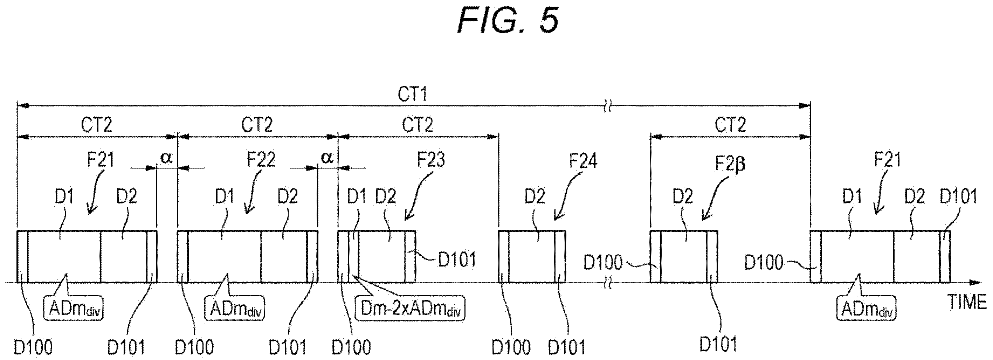

Processor 11 divides the main data into a plurality of pieces of divided data based on, for example, allowable maximum data size ADm_{div}, and thereby generates a plurality of main data pieces. Fig. 5 is an explanatory diagram of division processing by the communication device according to the exemplary embodiment of the present disclosure. For example, as illustrated in Fig. 5, processor 11 allocates the divided data (main data piece) having allowable maximum data size ADm_{div} sequentially from first divided frame F21 among the plurality of divided frames F21, F22,..., and F2β. That is, in the present exemplary embodiment, the divided data (main data piece) is allocated to the plurality of divided frames F2 in a so-called "front filling". As a result, main data region D1 is set in at least one divided frame F2 of the plurality of divided frames F2.

In the example illustrated in Fig. 5, the total data size Dm of the main data is larger than twice and smaller than three times allowable maximum data size ADm_{div}. Therefore, the divided data (main data piece) having allowable maximum data size ADm_{div} is allocated to first divided frame F21 and second divided frame F22. The divided data (main data piece) having a data size smaller than allowable maximum data size ADm_{div} is allocated to third divided frame F23. Since the allocation of all the divided data is completed up to third divided frame F23, main data region D1 is not included in fourth and subsequent divided frames F24,..., F2β.

As described above, in the present exemplary embodiment, it can be said that step ST10 includes division processing of dividing the main data into a plurality of main data pieces.

Processor 11 sets sub-data region D2 for each set second period CT2 (that is, for each divided frame F2). Here, processor 11 allocates slot SO to each slave 2 for each second period CT2 (for each divided frame F2). That is, processor 11 allocates slots D21, D22,..., and D2n to slaves 21, 22,..., and 2n, respectively, as slot S0. In short, in the setting processing, processor 11 sets slot SO for each second period CT2.

On the other hand, referring back to Fig. 4, in a case where minimum transmission time TTsf is equal to or longer than second period candidate CCT2 (No in step ST4) or in a case where required transmission time TTf is equal to or longer than second period candidate CCT2 (No in step ST8), processor 11 changes second period candidate CCT2 to a value larger than the current value. Here, processor 11 adds (increments) "1" to the number of repetitions "m" whose initial value is set to "1" (step ST11), and changes (updates) second period candidate CCT2 to a value obtained by the product of minimum communication period CTₘᵢₙ and the current number of repetitions m (step ST12). Therefore, in the present exemplary embodiment, it can be said that processor 11 sets, as second period CT2, a period that is an integral multiple of the supportable communication period (minimum communication period CTₘᵢₙ) of one or more slaves 2 in the setting processing. Then, processor 11 returns to step ST4, and repeats steps ST11, ST12, and ST4 to ST8 until required transmission time TTf becomes smaller than second period candidate CCT2 (Yes in step ST8).

### (4) Specific Examples

Hereinafter, a specific example of the setting processing will be described below. In the following description, it is assumed that first period CT1 is 500 µs. In the following description, it is assumed that communication system 100 includes three slaves 2 (first slave 21, second slave 22, and third slave 23). That is, in the following description, the number x of devices (communication device 1 and slaves 2) belonging to communication system 100 is four. In the following description, it is assumed that the data size of header D100 is 12 bytes and the data size of footer D101 is 12 bytes. In the following description, it is assumed that transfer rate Tr is 100 Mbps, delay time Td1 per slave 2 is 3 µs, delay time Td2 in entire communication system 100 is 1.5 µs, and time margin α is 3 µs.

First, a case where the setting data of each slave 2 is the data shown in Table 1 below will be described.

**[Table 1]**

| | First slave | Second slave | Third slave |
|---|---|---|---|
| Data size of main data (Bytes) | 32 | 16 | 32 |
| Data size of sub-data (Bytes) | 4 | 4 | 8 |
| Corresponding communication period (µs) | 31.25 | 15.625 | 31.25 |

In this case, since total data size Ds of the sub-data is 16 (= 4 + 4 + 8) bytes and the frame size of divided frame F2 including header D100, sub-data region D2, and footer D101 is 320 (= (12 + 16 + 12) × 8) bits, minimum transmission time TTsf is calculated as 16.7 (= 320/100 + 3 × 4 + 1.5) µs by Expression (1). In this case, since adaptable communication periods of first slave 21 and third slave 23 are the longest among adaptable communication periods of all slaves 21, 22, and 23, minimum communication period CTₘᵢₙ is 31.25 µs. Since minimum transmission time TTsf is shorter than minimum communication period CTₘᵢₙ (31.25 µs), processor 11 first sets minimum communication period CTₘᵢₙ (31.25 µs) as second period candidate CCT2. In this case, the number of divisions β is 16 (= 500/31.25) from Expression (2).

Since the total data size Dm of the main data is 80 (= 32 + 16 + 32) bytes, data size Dm_{div} of the divided data is 5 (= 80/16) bytes according to Expression (3), and the frame size of divided frame F2 including header D100, the transmission region of the divided data, sub-data region D2, and footer D101 is 360 (= (12 + 5 + 16 + 12) × 8) bits. Therefore, required transmission time TTf is calculated as 17.1 (= 360/100 + 3 × 4 + 1.5) µs by Expression (4). Since required transmission time TTf is smaller than second period candidate CCT2 (minimum communication period CTₘᵢₙ (31.25 µs)), processor 11 sets minimum communication period CTₘᵢₙ (31.25 µs) as second period CT2.

Processor 11 divides the main data into the divided data on the basis of allowable maximum data size ADm_{div}. In this case, allowable maximum data size ADm_{div} is 144.375 (= 5 + (31.25 - 17.1 -3) × 100/8) bytes according to Expression (5), and allowable maximum data size ADm_{div} is larger than data size Dm (80 bytes) of the main data. Therefore, for example, processor 11 generates divided frame F2 such that all the main data is transmitted in divided frame F21 (that is, only divided frame F21 includes main data region D1, and remaining divided frames F22,..., and F216 do not include main data region D1) without dividing the main data.

A case where the setting data of each slave 2 is the data shown in Table 2 below will be then described.

**[Table 2]**

| | First slave | Second slave | Third slave |
|---|---|---|---|
| Data size of main data (Bytes) | 320 | 320 | 160 |
| Data size of sub-data (Bytes) | 40 | 20 | 160 |
| Corresponding communication period (µs) | 31.25 | 15.625 | 31.25 |

In this case, since total data size Ds of the sub-data is 220 (= 40 + 20 + 160) bytes and the frame size of divided frame F2 including header D100, sub-data region D2, and footer D101 is 1952 (= (12 + 220 + 12) × 8) bits, minimum transmission time TTsf is calculated as 33.02 (= 1952/100 + 3 × 4 + 1.5) µs by Expression (1). In this case, since adaptable communication periods of first slave 21 and third slave 23 are the longest among adaptable communication periods of all slaves 21, 22, and 23, minimum communication period CTₘᵢₙ is 31.25 µs. Since minimum transmission time TTsf is equal to or longer than minimum communication period CTₘᵢₙ (31.25 µs), processor 11 adds "1" to the number of repetitions "m" whose initial value is "1", and sets a value (62.5 µs) obtained by multiplying minimum communication period CTₘᵢₙ (31.25 µs) by the number of repetitions m (twice in this case) as second period candidate CCT2. In this case, the number of divisions β is 8 (= 500/62. 5) according to Expression (2).

Since the total data size Dm of the main data is 800 (= 320 + 320 + 160) bytes, data size Dm_{div} of the divided data is 100 (= 800/8) bytes according to Expression (3), and the frame size of divided frame F2 including header D100, the transmission region of the divided data, sub-data region D2, and footer D101 is 2752 (= (12 + 100 + 220 + 12) × 8) bits. Therefore, required transmission time TTf is calculated as 41.02 (= 2752/100 + 3 × 4 + 1.5) µs by Expression (4). Since required transmission time TTf is smaller than second period candidate CCT2 (62.5 µs), processor 11 sets second period candidate CCT2 (62.5 µs) to second period CT2.

Processor 11 divides the main data into the divided data on the basis of allowable maximum data size ADm_{div}. In this case, allowable maximum data size ADm_{div} is 331 (= 100 + (62.5 - 41.02 -3) × 100/8) bytes according to Expression (5). For example, processor 11 allocates divided data of 331 bytes of the main data having a total data size of 800 bytes to divided frames F21 and F22 among the plurality of (here, since the number of divisions β = 8, the number of divisions β is eight) divided frames F21, F22,..., and F28, and allocates divided data of remaining 138 (= 800 - 331 × 2) bytes to divided frame F23, thereby dividing the main data into main data pieces (divided data).

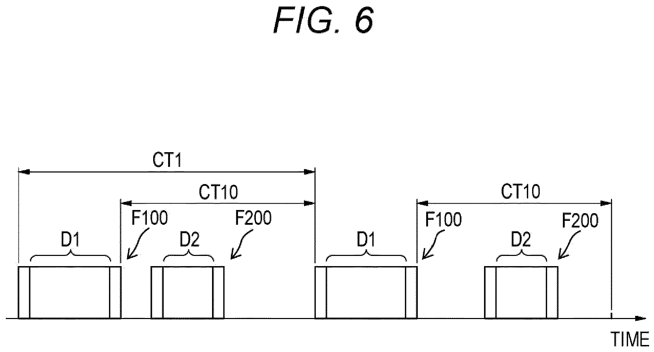

Hereinafter, advantages of communication device 1 according to the present exemplary embodiment will be described with reference to comparison with a communication device of a comparative example. The communication device of the comparative example is different from communication device 1 of the present exemplary embodiment in that the communication device does not have a function of executing division processing and setting processing. Fig. 6 is an explanatory diagram of communication processing executed by a communication device of the comparative example. As illustrated in Fig. 6, the communication device of the comparative example causes all the main data to be transmitted from communication device 1 or slave 2 in one frame (main frame) F100 regardless of data size Dm of the main data. When sub-data different from the main data is transmitted from communication device 1 or slave 2, another frame (sub-frame) F200 including sub-data region D2 is transmitted in free region CT10 excluding main frame F100 in first period CT1. However, in the communication device of the comparative example, since second period CT2 is not set and the timing at which sub-frame F200 is transmitted is not defined, the sub-data cannot be periodically transmitted. Therefore, in the communication device of the comparative example, it is difficult to perform periodic communication that can withstand use in an industrial network for the sub-data different from the main data.

On the other hand, in communication device 1 according to the present exemplary embodiment, for example, slave 2 to which slot SO is allocated in the setting processing can periodically receive the sub-data using slot SO in every second period CT2 separately from the main data transmitted in first period CT1. For example, slave 2 to which slot SO is allocated by the setting processing can periodically transmit the sub-data using slot SO in every second period CT2 separately from the main data. That is, in the present exemplary embodiment, it is easy that sub-data is periodically transmitted, received, or transferred in slave 2 connected to communication device 1. Therefore, in the present exemplary embodiment, periodic communication that can withstand use in the industrial network is easily performed for not only the main data but also the sub-data.

In the communication device of the comparative example, in a case where the data size of the main data is relatively large, there is a possibility that only the transmission of the main data occupies half or more of first period CT1 (that is, it takes more than half of first period CT1 only by transmitting main frame F100). In this case, it is difficult to set second period CT2 a plurality of times within first period CT1. On the other hand, in the present exemplary embodiment, frame F1 includes at least one slot SO in the middle of the transmission period of the main data. Therefore, in communication device 1 of the present exemplary embodiment, for example, slave 2 to which slot SO is allocated can periodically transmit, receive, or transfer the sub-data in a cycle (second period CT2) shorter than the transmission time of the main data. Therefore, in the present exemplary embodiment, there is an advantage that it is easy for slave 2 connected to communication device 1 to periodically transmit, receive, or transfer the sub-data at a cycle shorter than the time required for transmitting the main data. Therefore, in the present exemplary embodiment, periodic communication that can withstand use in the industrial network is further easily performed for not only the main data but also the sub-data.

### (5) Modification

The above-described exemplary embodiment is merely one of various exemplary embodiments of the present disclosure. The above exemplary embodiment can be variously changed according to a design and the like as long as the object of the present disclosure can be achieved. The same functions as those of communication device 1 may be embodied by a communication control method, a (computer) program, a non-transitory storage on which a program is recorded, or the like.

A communication control method according to one aspect includes a communication step and a setting step. The communication step is a step of transmitting frame F1 including main data to one or more slaves 2 connected to communication device 1 in first period CT1. The setting step is a step of setting N (N is an integer of 2 or more) second periods CT2 within first period CT1 and slot SO for performing communication of sub-data other than the main data for each second period CT2. Frame F1 includes at least one slot SO in the middle of the transmission period of the main data. A program according to one aspect causes one or more processors to execute the communication control method described above.

Modifications of the exemplary embodiment described above will be listed below. The modifications to be described below can be applied in appropriate combination.

Communication device 1 of the present disclosure includes, for example, a computer system in processor 11. The computer system mainly includes a processor and a memory as hardware. The processor executes a program recorded in the memory of the computer system to achieve a function of processor 11 in the present disclosure. The program may be recorded in advance in the memory of the computer system, may be provided through a telecommunication line, or may be provided by being recorded in a non-transitory storage readable by the computer system, such as a memory card, an optical disk, or a hard disk drive. The processor of the computer system includes one or a plurality of electronic circuits including a semiconductor integrated circuit (IC) or a large-scale integration (LSI) circuit. The integrated circuit such as the IC or the LSI in this disclosure is called differently depending on a degree of integration, and includes an integrated circuit called a system LSI, a very large scale integration (VLSI), or an ultra large scale integration (ULSI). Further, a field-programmable gate array (FPGA) programmed after manufacture of LSI, and a logical device capable of reconfiguring a joint relationship in LSI or reconfiguring circuit partitions in LSI can also be used as processors. The plurality of electronic circuits may be integrated into one chip or may be provided in a distributed manner on a plurality of chips. The plurality of chips may be aggregated in one device or may be provided in a distributed manner in a plurality of devices. The computer system in this disclosure includes a microcontroller having at least one processor and at least one memory. Therefore, the microcontroller is also constituted by one or a plurality of electronic circuits including a semiconductor integrated circuit or a large-scale integrated circuit.

Integration of a plurality of functions in processor 11 into one housing is not essential for processor 11. The components of processor 11 may be distributed in a plurality of housings. Further, at least some of the functions of processor 11 may be achieved by a server device, or a cloud (cloud computing), for example. On the contrary, as in the above-described exemplary embodiment, all the functions of processor 11 may be integrated into one housing.

In one modification, when slave 2 having a comparatively long adaptable communication period in the setting processing belongs to communication system 100, processor 11 of communication device 1 may make the adaptable communication period of slave 2 equal to adaptable communication periods of other slaves 2. That is, the adaptable communication period of slave 2 is a period necessary for executing processing having a comparatively large processing load, such as processing for generating and transmitting data. Therefore, in a case where processing having a comparatively small processing load such as processing for simply acquiring data is executed, the adaptable communication period of slave 2 can be set to be short. As described above, when the adaptable communication period of slave 2 is made to be equal to the other adaptable communication periods, minimum communication period CTₘᵢₙ can be adjusted as a result. In other words, minimum communication period CTₘᵢₙ may be set to any value.

In one modification, slot SO may have a certain degree of variation based on a predetermined time. That is, the deviation of slot SO is preferably within an allowable time shorter than at least second period CT2. Specifically, in second period CT2 in which divided frame F2 including main data region D1 is transmitted, the transmission of slot SO may be started at any timing as long as the reception of slot SO can be completed in slave 2 before the end of second period CT2. For example, even in a case where the end timing of main data region D1 is later than the example illustrated in Fig. 2, if the reception of slot SO in each slave 2 is completed before the end of second period CT2, a deviation of the timing to start the transmission of slot SO is allowed.

In one modification, the order of main data region D1 and sub-data region D2 in divided frame F2 is not limited to the case where main data region D1 comes first, and sub-data region D2 may come first.

In the setting processing of the above exemplary embodiment, when there are a plurality of types of slaves 2 having mutually different supportable communication periods, an integral multiple of a least common multiple of the supportable communication periods (repetition number m times) is set as second period CT2, but the present invention is not limited thereto. In one modification, not all the plurality of types of slaves 2 may be set as the allocation target of slot S0, but some of slaves 2 may be excluded from the allocation target of slot S0. For example, if slot SO is to be allocated to only one type of slave 2 among the plurality of types of slaves 2, second period CT2 is set to an adaptable communication period of this type of slave 2.

In one modification, even when calculated second period CT2 does not coincide with an integral multiple of the adaptable communication period of each slave 2, calculated second period CT2 may be set as it is as second period CT2. In this case, first period CT1 may include a remainder period in addition to N second periods CT2.

In one modification, slave 2 is not limited to the motor drive device, and may be another device such as a sensor. In one modification, the motor drive device may not be included in the plurality of slaves 2. For example, all slaves 2 may be sensors.

In one modification, the number of slaves 2 belonging to communication system 100 may be one. In this aspect, communication device 1 can acquire the sub-data transmitted from slave 2 in second period CT2 while generating the main data in every first period CT1.

In the above exemplary embodiment, communication device 1 performs wired communication with each slave 2 using a wired communication module, but the present disclosure is not limited thereto. In one modification, communication device 1 may perform wireless communication with each slave 2 using a wireless communication module.

In one modification, processor 201 of slave 2 may cause communication part 202 to transmit other data other than the sub-data using, for example, a free region excluding divided frame F2 in second period CT2. As an example, the other data is data having a larger data size than control data included in the main data, and may include an image or the like used for monitoring or managing a manufacturing process or the like in a production line or a factory. Unlike the main data and the sub-data, the other data does not require punctuality and real-time property.

In the above-described exemplary embodiment, processor 11 of communication device 1 does not transmit the sub-data to each slave 2 in the communication processing, but may transmit the sub-data to each slave 2. That is, if there is a margin in the processing performance of processor 11, processor 11 can execute the processing for generating the sub-data in parallel with the processing for generating the main data and transmit the generated sub-data to each slave 2.

The method for updating second period candidate CCT2 is not limited to the method using the product of minimum communication period CTₘᵢₙ and the number of repetitions m. In one modification, the input of second period candidate CCT2 may be received from the user, or a value twice as large as current second period candidate CCT2 may be used as updated second period candidate CCT2.

In one modification, processor 11 may divide the main data into a plurality of pieces of divided data (main data pieces) in parts of slave 2 in the division processing. In one example, processor 11 divides the main data into n pieces of divided data including divided data including the control data of first slave 21, divided data including the control data of second slave 22,..., and divided data including the control data of the nth slave 2. In another example, processor 11 divides the main data into n/2 (n is an even number) pieces of divided data including the divided data including the control data of first slave 21 and the control data of second slave 22, divided data including the control data of third slave 23 and the control data of the fourth slave 24,..., the divided data including the control data of the nth-1 slave 2n-1 and the control data of the nth slave 2n. That is, each of the plurality of pieces of divided data (main data pieces) can include the control data for at least one slave 2. In this case, after the data size of the divided data is adjusted (that is, division processing) (step ST10), there is a possibility that the transmission time of divided frame F2 including header D100, the transmission region of the divided data, sub-data region D2, and footer D101 exceeds second period CT2 set in step ST9. In that case, processor 11 may return to step ST11 to set (update) second period CT2 again. As a matter of course, as in the above-described exemplary embodiment, processor 11 may not use slave 2 as a part when dividing the main data into the plurality of main data pieces in the division processing.

In one modification, in a case where the main data is divided into a plurality of main data pieces in advance, processor 11 may not perform the division processing.

In one modification, processor 11 may not perform the process of re-adjusting the data size of the divided data (step ST10). For example, processor 11 may divide the main data into the divided data (main data pieces) on the basis of data size Dm_{div} of the divided data calculated in step ST6.

In one modification, the data size of each of the plurality of main data pieces may be arbitrarily set within a range that can be transmitted in second period CT2. For example, in the division processing, processor 11 may divide the main data into the divided data having a data size smaller than allowable maximum data size ADm_{div}.

In one modification, the plurality of slaves 2 may not execute the processing according to the main data in synchronization with each other. For example, in the example of Fig. 2, first slave 21 and second slave 22 may execute the processing according to the main data without waiting for the transmission of divided frame F22 at the time point when the transmission of divided frame F21 is completed.

In one modification, in first period CT1 different from each other, second periods CT2 may be set to different values. That is, second period CT2 may be variable for each first period CT1. However, second periods CT2 different from each other are preferably obtained before communication system 100 is operated.

In an example of the daisy chain connection, first slave 21, second slave 22, third slave 23,..., and nth slave 2n may be sequentially connected to communication device 1 in a line shape. In this case, frame F1 transmitted from communication device 1 is transmitted to first slave 21, second slave 22, third slave 23,..., and nth slave 2n in this order.

The present disclosure is suitable for a communication device, a communication system, a communication control method, and a program that need to transmit or receive sub-data within a predetermined time while performing periodic transmission of main data.

### REFERENCE MARKS IN THE DRAWINGS

1: communication device
11: processor
12: communication part
2: slave
100: communication system
CT1: first period
CT2: second period
F1: frame
S0: slot

## Claims

1. A communication device (1) comprising:
a processor (11); and
a communication part (12) that is configured to communicate with one or more slaves (21~ 2n), wherein
the processor (1) has a function of
communication processing of causing the communication part (12) to transmit a first frame (F1) including main data transmitted in main data region (D1) and sub-data transmitted in sub-data region (D2) to the one or more slaves (21~ 2n) in a first period (CT1),
**characterized in that**:
the processor (1) sets N second periods (CT2) within the first period (CT1), where N is an integer of 2 or more, a slot (S0) for performing communication of sub-data other than the main data for each of the N second periods (CT2), and divides the main data into the plurality of main data pieces,
in the communication processing,
the first frame (F1) is divided into Nth second frames (F2, F21~F2β), each of the Nth second frames (F2, F21~F2β) is set in each of N second periods (CT2),
the plurality of main data pieces transmitted in slots (D11~D1n) are included in a plurality of second frames (F2, F21~F2β) within the first period (CT1), and
a header (D100) and sub-data transmitted in sub-data region (D2) are included in each of the Nth second frames (F2, F21~F2β) within the second period (CT2),
wherein each of the plurality of main data pieces having a data size that is set within other than a time that the header (D100) and the sub-data transmitted in sub-data region (D2) is included in each of the Nth second frames (F2, F21~F2β) in the second period (CT2), and
the processor (11) is configured to set the second period (CT2) based on at least one of the first period (CT1), a data size of the main data, and a data size of the sub-data in the setting processing.

2. The communication device (1) according to Claim 1, wherein the setting N second periods (CT2) includes allocating the slot (S0) to at least one slave of the one or more slaves (21~ 2n) for each of the N second periods (CT2).

3. The communication device (1) according to Claim 1 or 2, wherein the frame (F1) includes data for controlling the one or more slaves (21~2n) in the first period (CT1).

4. The communication device (1) according to any one of Claims 1 to 3, wherein the frame (F1) includes data for synchronizing operations of the one or more slaves (21~2n).

5. The communication device (1) according to any one of Claims 1 to 4, wherein the one or more slaves (21~2n) are daisy-chained to the communication device (1).

6. The communication device (1) according to any one of Claims 1 to 5, wherein the processor (11) is configured to set, as the second period, a period that is an integral multiple of a communication period that is capable of being handled by the one or more slaves in the setting processing.

7. The communication device (1) according to any one of Claims 1 to 6, wherein at least one slave of the one or more slaves (21~2n) is a motor drive device that drives a motor.

8. The communication device (1) according to any one of Claims 1 to 7, wherein each of the one or more slaves (21~ 2n) has a communication period, the processor (11) is configured to examine a minimum transmission time (TTsf), determine a minimum communication period (CTmin) being the maximum time of the communication period, set the minimum communication period (CTmin) as a second period candidate (CCT2), compare the minimum transmission time (TTsf) with the second period candidate (CCT2), calculate a required transmission time (TTf) when the minimum transmission time (TTsf) is shorter than second period candidate (CCT2), compare the required transmission time (TTf) with second period candidate (CCT2), and set the second period candidate (CCT2) to second period (CT2) when required transmission time (TTf) is shorter than second period candidate (CCT2).

9. The communication device (1) according to Claim 8, wherein the processor (11) is configured to add "1" to a number of repetitions "m" whose initial value is "1", and set a value obtained by multiplying minimum communication period (CTmin) by the number of repetitions "m+1" as second period candidate (CCT2).

10. A communication system (100), comprising: the communication device (1) according to any one of Claims 1 to 9; and
the one or more slaves (21~2n) that are connected to the communication device (1) and adapted to communicate with the communication device (1).

11. A communication control method performed by a communication device (1) according to any one of Claims 1 to 9, said method comprising the steps of :
causing the first frame (F1) including main data transmitted in (D1) to be transmitted to one or more slaves (21~2n) connected to a communication device (1) in a first period (CT1); and
setting N second periods (CT2), where N is an integer of 2 or more, within the first period (CT1) and a slot (SO) for performing communication of sub-data other than the main data for each of the N second periods (CT2), wherein the first frame (F1) includes at least one of the slots (SO) during the first period (CT1), dividing the first frame (F1) into Nth second frames (F2, F21~F2β), each of the Nth second frames (F2, F21~F2β) is set in each of N second periods (CT2),
including the plurality of main data pieces transmitted in slots (D11~D1n) in a plurality of second frames (F2, F21-F20), and
including a header (D 100) and sub-data transmitted in (D2) in each of the Nth second frames (F2, F21~F2β).

12. A computer-program product comprising instructions which , when executed by one or more processors of a communication device (1) according to any of claims 1 to 9, causes said communication device (1) to execute all the steps of the communication control method according to Claim 11.

## Patentansprüche

1. Kommunikationsvorrichtung (1), mit:
einem Prozessor (11); und
einem Kommunikationsteil (12), der zur Kommunikation mit einem oder mehreren Slaves (21~2n) konfiguriert ist, wobei
der Prozessor (1) die folgende Funktion hat:
Kommunikationsverarbeitung, bei der der Kommunikationsteil (12) veranlasst wird, einen ersten Frame (F1) zu senden, der die im Hauptdatenbereich (D1) übertragenen Hauptdaten und Subdaten enthält, die im Subdatenbereich (D2) an einen oder mehrere Slaves (21~ 2n) in einer ersten Periode (CT1) übertragenen werden,
**dadurch gekennzeichnet, dass**:
der Prozessor (1) innerhalb der ersten Periode (CT1) N Zweitperioden (CT2) festlegt, wobei N eine ganze Zahl von 2 oder größer ist, einen Slot (S0) für die Kommunikation von Teildaten, die nicht zu den Hauptdaten gehören, für jede der N Zweitperioden (CT2), und die Hauptdaten in die Vielzahl der Hauptdatenteile aufteilt,
wobei bei der Kommunikationsverarbeitung:
der erste Frame (F1) in N-te Zweitframes (F2, F21~F2β) unterteilt wird, wobei jeder der N-ten Zweitframes (F2, F21~F2β) in jeweils einer von N Zweitperioden (CT2) eingestellt wird,
die Vielzahl der in Slots (D11~D1n) übertragenen Hauptdatenteile in einer Vielzahl von Zweitframes (F2, F21~F2β) innerhalb der ersten Periode (CT1) enthalten ist, und
ein Header (D100) und im Subdatenbereich (D2) übertragene Subdaten in jedem der N-ten Zweitframes (F2, F21~F2β) innerhalb der zweiten Periode (CT2) enthalten sind,
wobei jedes der Vielzahl der Hauptdatenteile eine Datengröße aufweist, die innerhalb einer anderen Zeit als der Zeit festgelegt ist, in der der Header (D100) und die im Subdatenbereich (D2) übertragenen Subdaten in jedem der N-ten Frames (F2, F21~F2β) in der zweiten Periode (CT2) enthalten sind, und
der Prozessor (11) so konfiguriert ist, dass er die zweite Periode (CT2) auf der Grundlage mindestens eines der folgenden Werte festlegt: der ersten Periode (CT1), der Datengröße der Hauptdaten und der Datengröße der Subdaten bei der Einstellungsverarbeitung.

2. Kommunikationsvorrichtung (1) nach Anspruch 1, wobei die Einstellung der N Zweitperioden (CT2) das Zuweisen des Slots (S0) an mindestens einen der einen oder mehreren Slaves (21~ 2n) für jede der N Zweitperioden (CT2) umfasst.

3. Kommunikationsvorrichtung (1) nach Anspruch 1 oder 2, wobei der Frame (F1) Daten zur Steuerung des einen oder mehrerer Slaves (21~2n) in der ersten Periode (CT1) enthält.

4. Kommunikationsvorrichtung (1) nach einem der Ansprüche 1 bis 3, wobei der Frame (F1) Daten zur Synchronisierung der Vorgänge des einen oder mehrerer Slaves (21~2n) enthält.

5. Kommunikationsvorrichtung (1) nach einem der Ansprüche 1 bis 4, wobei ein oder mehrere Slaves (21~2n) in Reihe mit der Kommunikationsvorrichtung (1) geschaltet sind.

6. Kommunikationsvorrichtung (1) nach einem der Ansprüche 1 bis 5, wobei der Prozessor (11) so konfiguriert ist, dass er als zweite Periode eine Periode festlegt, die ein ganzzahliges Vielfaches einer Kommunikationsperiode ist, die von dem oder den Slaves bei der Einstellungsverarbeitung verarbeitet werden kann.

7. Kommunikationsvorrichtung (1) nach einem der Ansprüche 1 bis 6, wobei mindestens ein Slave des einen oder der mehreren Slaves (21~2n) ein Motorantriebsgerät ist, das einen Motor antreibt.

8. Kommunikationsvorrichtung (1) nach einem der Ansprüche 1 bis 7, wobei jeder der einen oder mehreren Slaves (21~ 2n) eine Kommunikationsperiode hat, wobei der Prozessor (11) so konfiguriert ist, dass er eine minimale Übertragungszeit (TTsf) untersucht, eine minimale Kommunikationsperiode (CT ₘᵢₙ) festlegt, die die maximale Dauer der Kommunikationsperiode darstellt, die minimale Kommunikationsperiode (CT ₘᵢₙ) als zweiten Periodenkandidaten (CCT2) festlegt, die minimale Übertragungszeit (TTsf) mit dem Kandidaten der zweiten Periode (CCT2) vergleicht, die erforderliche Übertragungszeit (TTf) berechnet, wenn die minimale Übertragungszeit (TTsf) kürzer ist als die des Kandidaten für die zweite Periode (CCT2 ), die erforderliche Übertragungszeit (TTf) mit der zweiten Periodenkandidatenzeit (CCT2) vergleicht und den Kandidaten für die zweite Periode (CCT2) auf die zweite Periode (CT2 ) setzt, wenn die erforderliche Übertragungszeit (TTf) kürzer ist als die des Kandidaten für die zweite Periode (CCT2).

9. Kommunikationsvorrichtung (1) nach Anspruch 8, wobei der Prozessor (11) so konfiguriert ist, dass er "1" zu einer Anzahl der Wiederholungen "m" hinzufügt, deren Anfangswert "1" ist, und einen Wert festlegt, der sich durch Multiplikation der minimalen Kommunikationsperiode (CT ₘᵢₙ) mit der Anzahl der Wiederholungen "m +1 " als Kandidat der zweiten Periode (CCT2) ergibt.

10. Kommunikationssystem (100), das umfasst:
die Kommunikationsvorrichtung (1) nach einem der Ansprüche 1 bis 9; und
den einen oder die mehreren Slaves (21-2n), die mit der Kommunikationsvorrichtung (1) verbunden sind und mit der Kommunikationsvorrichtung (1) kommunizieren.

11. Kommunikationssteuerungsverfahren für die Kommunikationsvorrichtung (1) nach einem der Ansprüche 1 bis 9, wobei das Verfahren die folgenden Schritte umfasst:
Bewirken, dass der erste Frame (F1), der die in (D1) übertragenen Hauptdaten enthält, in einer ersten Periode (CT1) an einen oder mehrere Slaves (21~2n) übertragen wird, die mit einer Kommunikationsvorrichtung (1) verbunden sind; und
Festlegung von N Zweitperioden (CT2), wobei N eine ganze Zahl von 2 oder mehr ist, innerhalb der ersten Periode (CT1) und eines Slots (S0) zur Durchführung der Kommunikation von Subdaten, die nicht die Hauptdaten sind, für jede der N Zweitperioden (CT2), wobei der erste Frame (F1) mindestens einen der Slots (S0) während der ersten Periode (CT1) enthält,
Unterteilen des ersten Frames (F1) in N-te Zweitframes (F2, F21~F2β), wobei jeder der N-ten Zweitframes (F2, F21~F2β) in jeweils einer N Zweitperioden (CT2) eingestellt wird,
Einschließen der Vielzahl der Hauptdatenteile, die in Slots (D11~D1n) übertragen werden, in mehrere Zweitframes (F2, F21~F2β) und
Einschließen eines Headers (D100) und der in (D2) übertragenen Subdaten in jeden der N-ten Zweitframes (F2, F21~F2β).

12. Computerprogrammprodukt, das Instruktionen umfasst, welche, wenn sie durch einen oder mehrere Prozessoren einer Kommunikationsvorrichtung (1) nach einem der Ansprüche 1 bis 9 ausgeführt werden, die Kommunikationsvorrichtung (1) veranlassen, alle Schritte des Kommunikationssteuerungsverfahren gemäß Anspruch 11 auszuführen.

## Revendications

1. Dispositif de communication (1) comprenant :
un processeur (11) ; et
une partie de communication (12) qui est configurée pour communiquer avec un ou plusieurs esclaves (21~ 2n), dans lequel
le processeur (1) a une fonction de
traitement de communication consistant à amener la partie de communication (12) à transmettre une première trame (F1) comprenant des données principales transmises dans la zone de données principales (D1) et des sous-données transmises dans la zone de sous-données (D2) à l'esclave ou aux esclaves (21~ 2n) dans une première période (CT1), **caractérisé en ce que** :
le processeur (1) définit N deuxièmes périodes (CT2) au sein de la première période (CT1), où N est un entier supérieur ou égal à 2, un créneau (S0) pour effectuer une communication de sous-données autres que les données principales pour chacune des N deuxièmes périodes (CT2), et divise les données principales en la pluralité de fragments de données principales,
dans le traitement de communication,
la première trame (F1) est divisée en N-ièmes deuxièmes trames (F2, F21~F2β), chacune des N-ièmes deuxièmes trames (F2, F21~F2β) est définie dans chacune des N deuxièmes périodes (CT2),
la pluralité de fragments de données principales transmis dans des créneaux (D11~D1n) est incluse dans une pluralité de deuxièmes trames (F2, F21~F2β) au sein de la première période (CT1), et
un en-tête (D100) et des sous-données transmises dans la zone de sous-données (D2) sont inclus dans chacune des N-ièmes deuxièmes trames (F2, F21~F2β) au sein de la deuxième période (CT2),
dans lequel chaque fragment de la pluralité de fragments de données principales a une taille de données qui est définie dans une durée autre que celle pendant laquelle l'en-tête (D100) et les sous-données transmises dans la zone de sous-données (D2) sont inclus dans chacune des N-ièmes deuxièmes trames (F2, F21~F2β) dans la deuxième période (CT2), et
le processeur (11) est configuré pour définir la deuxième période (CT2) sur la base d'au moins un élément parmi la première période (CT1), une taille des données principales et une taille des sous-données, dans le traitement de définition.

2. Dispositif de communication (1) selon la revendication 1, dans lequel la définition de N deuxièmes périodes (CT2) comprend l'attribution du créneau (S0) à au moins un esclave parmi le ou les esclaves (21~ 2n) pour chacune des N deuxièmes périodes (CT2).

3. Dispositif de communication (1) selon la revendication 1 ou 2, dans lequel la trame (F1) comprend des données pour commander le ou les esclaves (21~2n) dans la première période (CT1).

4. Dispositif de communication (1) selon l'une quelconque des revendications 1 à 3, dans lequel la trame (F1) comprend des données pour synchroniser des opérations de l'esclave ou des esclaves (21~2n).

5. Dispositif de communication (1) selon l'une quelconque des revendications 1 à 4, dans lequel le ou les esclaves (21~2n) sont connectés en guirlande au dispositif de communication (1).

6. Dispositif de communication (1) selon l'une quelconque des revendications 1 à 5, dans lequel le processeur (11) est configuré pour définir, en tant que deuxième période, une période qui est un multiple entier d'une période de communication susceptible d'être prise en charge par le ou les esclaves dans le traitement de définition.

7. Dispositif de communication (1) selon l'une quelconque des revendications 1 à 6, dans lequel au moins un esclave parmi le ou les esclaves (21~2n) est un dispositif d'entraînement de moteur qui entraîne un moteur.

8. Système de communication (100), comprenant :
le dispositif de communication (1) selon l'une quelconque des revendications 1 à 7 ; et
le ou les esclaves (21~2n) qui sont connectés au dispositif de communication (1) et communiquent avec le dispositif de communication (1).

9. Procédé de commande de communication du dispositif de communication (1) selon l'une quelconque des revendications 1 à 7 comprenant :
le fait d'amener la première trame (F1) comprenant des données principales transmises dans (D1) à être transmise à un ou plusieurs esclaves (21~2n) connectés à un dispositif de communication (1) dans une première période (CT1) ; et
la définition de N deuxièmes périodes (CT2), où N est un entier supérieur ou égal à 2, au sein de la première période (CT1) et d'un créneau (S0) pour effectuer une communication de sous-données autres que les données principales pour chacune des N deuxièmes périodes (CT2), dans lequel la première trame (F1) comprend au moins l'un des créneaux (S0) pendant la première période (CT1),
la division de la première trame (F1) en N-ièmes deuxièmes trames (F2, F21~F2β), chacune des N-ièmes deuxièmes trames (F2, F21~F2β) est définie dans chacune des N deuxièmes périodes (CT2),
l'inclusion de la pluralité de fragments de données principales transmis dans des créneaux (D11~D1n) dans une pluralité de deuxièmes trames (F2, F21~F2β), et
l'inclusion d'un en-tête (D100) et de sous-données transmises dans (D2) dans chacune des N-ièmes deuxièmes trames (F2, F21~F2β).

10. Programme destiné à amener un ou plusieurs processeurs à exécuter le procédé de commande de communication selon la revendication 9.

11. Dispositif de communication (1) selon l'une quelconque des revendications 1 à 7, dans lequel
le ou les esclaves (21~ 2n) ont chacun une période de communication,
le processeur (11) est configuré pour
examiner une durée minimale de transmission (TTsf),
déterminer une période minimale de communication (CTₘᵢₙ) étant la durée maximale de la période de communication,
définir la période minimale de communication (CTₘᵢₙ) en tant que période candidate pour la deuxième période (CCT2),
comparer la durée minimale de transmission (TTsf) avec la période candidate pour la deuxième période (CCT2),
calculer une durée de transmission requise (TTf) lorsque la durée minimale de transmission (TTsf) est plus courte que la période candidate pour la deuxième période (CCT2),
comparer la durée de transmission requise (TTf) avec la période candidate pour la deuxième période (CCT2), et
définir la période candidate pour la deuxième période (CCT2) en tant que deuxième période (CT2) lorsque la durée de transmission requise (TTf) est plus courte que la période candidate pour la deuxième période (CCT2).

12. Dispositif de communication (1) selon la revendication 11, dans lequel
le processeur (11) est configuré pour
ajouter « 1 » à un nombre de répétitions « m » dont la valeur initiale est « 1 », et
définir une valeur obtenue en multipliant la période minimale de communication (CTₘᵢₙ) par le nombre de répétitions « m+1 » en tant que période candidate pour la deuxième période (CCT2).
